# EUROPEAN PATENT SPECIFICATION

(11) **EP 2 044 867 B1**
(45) Date of publication and mention of the grant of the patent: **05.01.2011**
(21) Application number: 08165485.7
(22) Date of filing: 30.09.2008
(51) Int. Cl.: A47J 31/36

(54) **Machine for producing drinks by infusion**
Maschine zum Erstellen von Getränken durch Infusion
Machine pour la production de boissons par infusion

(30) Priority: 04.10.2007 IT MI20071911
(43) Date of publication of application: 08.04.2009
(73) Proprietor: Capitani S.r.l., 22070 Solbiate (CO) (IT)
(72) Inventor: Pineschi, Massimiliano, 41100 Villanova Loc. San Pancrazio (MO) (IT)
(74) Representative: Chimini, Francesco

(56) References cited:
- EP-A- 1 721 553
- EP-A- 1 757 212
- WO-A-2006/013124
- WO-A-2008/004116
- WO-A-2008/014830

## Description

The present invention relates to a machine for producing drinks such as coffee, tea, and the like obtained by infusion of a pre-measured powdered or granular product contained in suitable containers or capsules.

Presently known are machines for producing drinks by infusion comprising a hot-water dispensing unit, a cup-shaped element or cup adapted to house a container inside which there is the product to be used by infusion, and an actuator acting on the cup to move it close to and away from the hot-water dispensing unit, in particular for allowing loading of the container, infusion and unloading of said container. The hot-water dispensing unit comprises a diffuser having a plurality of nozzles adapted to direct a flow of hot water into the cup, through an opening facing the water dispensing unit. In turn, the cup is connected to an outlet pipe receiving the drink obtained by infusion and contained in the cup and transferring it to a glass or other vessel.

Machines of the above described type are disclosed in the Italian Patent No. IT1320869, for example. In particular, the machine described in this patent comprises an actuating device acting on the cup to cause a rotation of said cup around a horizontal axis. In this way, the cup can be such disposed that its mouth is turned towards an inlet station, which will facilitate introduction of a capsule containing the product to be used by infusion, falling by gravity into the cup; in addition said cup can be also rotated so that its mouth faces an unloading station, thus facilitating falling by gravity of the container therein, towards the unloading station. Rotation of the cup is obtained by a lever sensing displacement of the cup from and towards the water dispensing unit and causing rotation of same around said horizontal axis.

In the Italian Patent Application No. MI2004A002256 it is disclosed a machine for producing a drink by infusion comprising a hot-water dispensing unit, a cup-shaped element adapted to support a capsule containing a product intended for infusion, and a pair of retaining arms acting between the water dispensing unit and the cup to keep the capsule in a position suitable for introduction into the cup. The retaining arms are maintained in place by respective counter-springs hindering spreading-apart of the arms so as to support the capsule in place. When the water dispensing unit, movable from and towards the cup, approaches the cup, it pushes on the capsule forcing it to free itself from the grip of the retaining arms. In addition, when a new capsule has to replace the previously used one, thrust of the new capsule against the underlying one already used forces the retaining arms to open wide thus causing them to release the used capsule that is unloaded, while the new capsule is held by the retaining arms that have gone back to the starting position.

However the machines of the above described type have some drawbacks.

With reference to the first-mentioned machine described in the Italian patent, supply of the capsule falling by gravity does not ensure correct positioning of the capsule that therefore can not succeed in matching the cup correctly or, which is more dangerous, can cause jamming of the machine, so that intervention of an operator will be required.

With reference to the second machine described in the Italian patent application, the thrust action exerted by the water dispensing unit on the capsule as required for causing release of the capsule by the retaining arms, can damage the capsule so that the product to be used by infusion may escape therefrom, or the capsule may be permanently deformed or again jamming of the machine requiring intervention of an operator can occur. In addition, the already used capsule is retained by the retaining arms and can be released only when a new capsule is set down therein. This involves that the used capsule can stay in place for a long time being supported by the retaining arms, which will bring about risks of deterioration at the inside of the machine or, if it is immediately replaced by a new capsule to be used later on, the new capsule can lose its flavour and freshness features over time if it stays inside the machine for a long period of time.

EP 1 757 212 A2 discloses a cap extraction device in which guiding means for receiving the cap are associated to the extraction plate of the device. In one embodiment, said guiding means are pivotable, under the action of a lever driven by the movable part, between a cap immobilization and a cap release position.

It is a technical task of the present invention to make available a machine for producing drinks by infusion that is devoid of the above mentioned drawbacks.

Within the scope of this technical task it is an aim of the invention to make available a machine for producing drinks by infusion that is able to carry out automatic loading of the capsules without the risk of the capsules being damaged.

It is also an important aim of the invention to make available a machine for producing drinks by infusion which is very reliable.

A further important aim of the invention is to provide a machine for producing drinks by infusion that maintains the quality of the infused drinks thus produced over time.

The foregoing and further aims that will become more apparent in the following of the present specification are substantially achieved by a machine for producing drinks by infusion which has the features set forth in claim 1 and/or in one or more of the claims depending thereon.

Description of a preferred but not exclusive embodiment of a machine for producing drinks by infusion in accordance with the present invention is given hereinafter with the aid of the accompanying drawings, in which:
- Fig. 1 is a perspective view of a machine for producing drinks by infusion in accordance with the present invention;
- Fig. 2 is a perspective view of the machine seen in Fig. 1 with some parts removed for a better view of the inside of the machine;
- Figs. 3a to 3c are perspective views of a portion of the machine in Fig. 1 during respective operating steps;
- Figs. 4a to 4e show a sequence of sectional views of the machine seen in Fig. 1 according to respective operating steps.

In accordance with the drawings, a machine for producing drinks obtained by infusion in accordance with the invention is generally identified with reference numeral 1.

The machine comprises a hot-water dispensing unit 100, a loading unit 300 to load a container, in particular a capsule "C" internally having a pre-measured amount of a granulate or powdered product to be used by infusion, and an infusion unit 200 operatively associable with the water dispensing unit 100 to cause infusion of the product contained in capsule "C". The loading unit 300 acts on the infusion unit 200 for feeding capsule "C" to the infusion unit 200.

Said water dispensing unit 100, infusion unit 200 and loading 300 unit are enclosed in a pair of external half-casings 2 of the machine 1.

In accordance with the drawings, machine 1 is disposed in a horizontal orientation, i.e. it has a horizontal major extension direction.

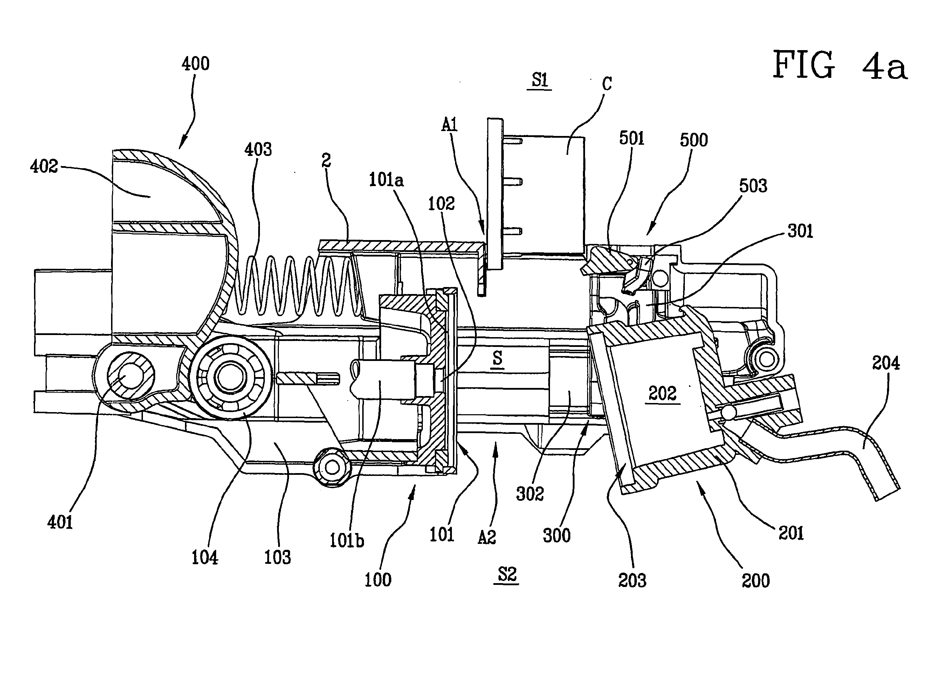

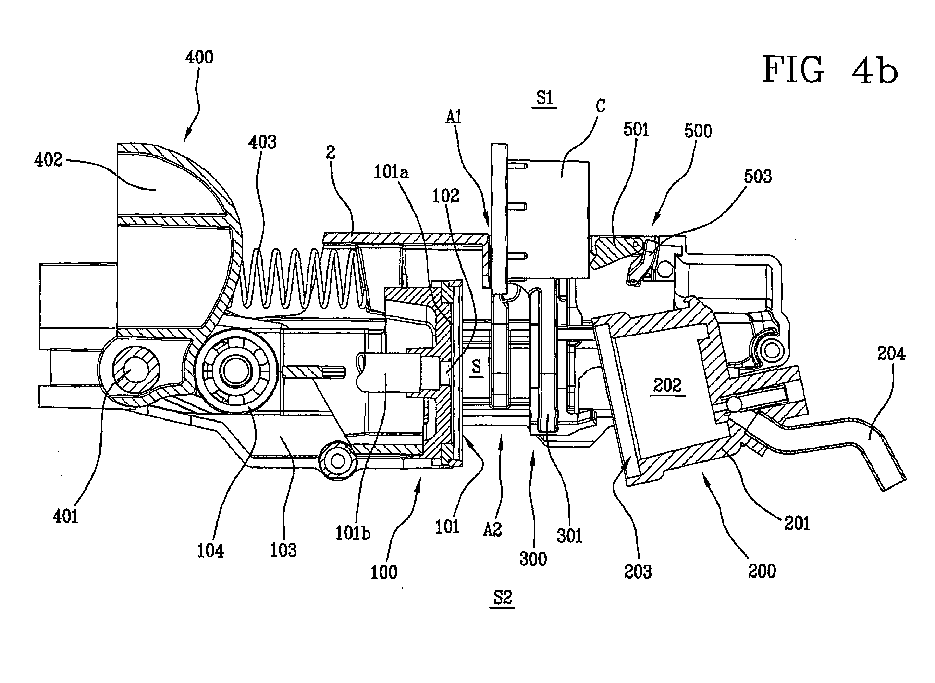

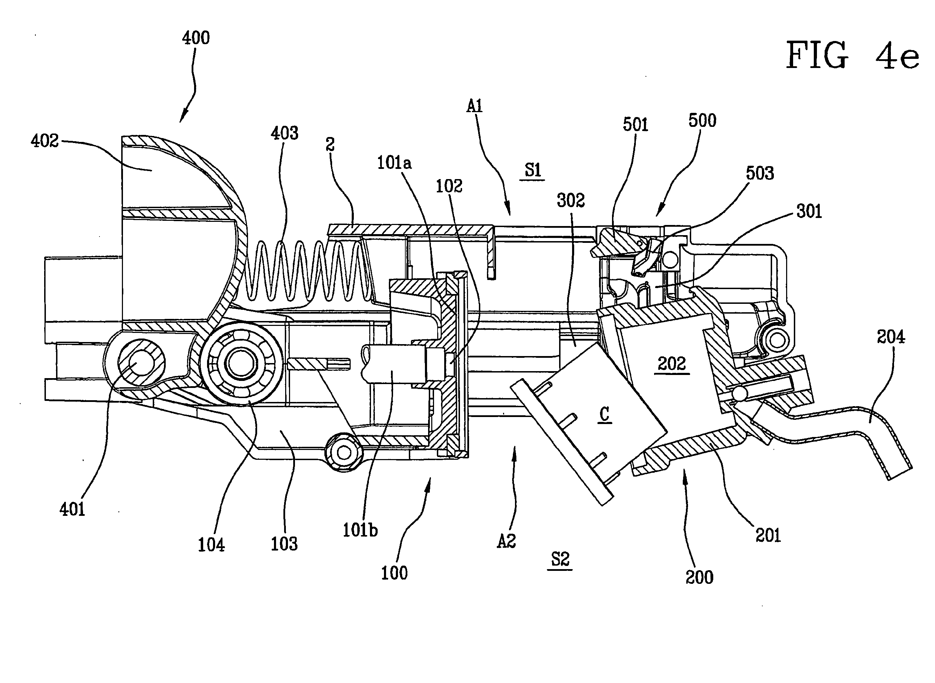

The water dispensing unit 100 comprises a diffuser 101 having an inner chamber 101a into which preferably already heated water flows, said water coming from a duct 101b connected to a feeding unit not shown as it is known. Diffuser 101 further comprises an outlet section 102 shown in Figs. 4a, 4b, 4e, equipped with a plurality of nozzles adapted to address a hot water flow towards the infusion unit 200.

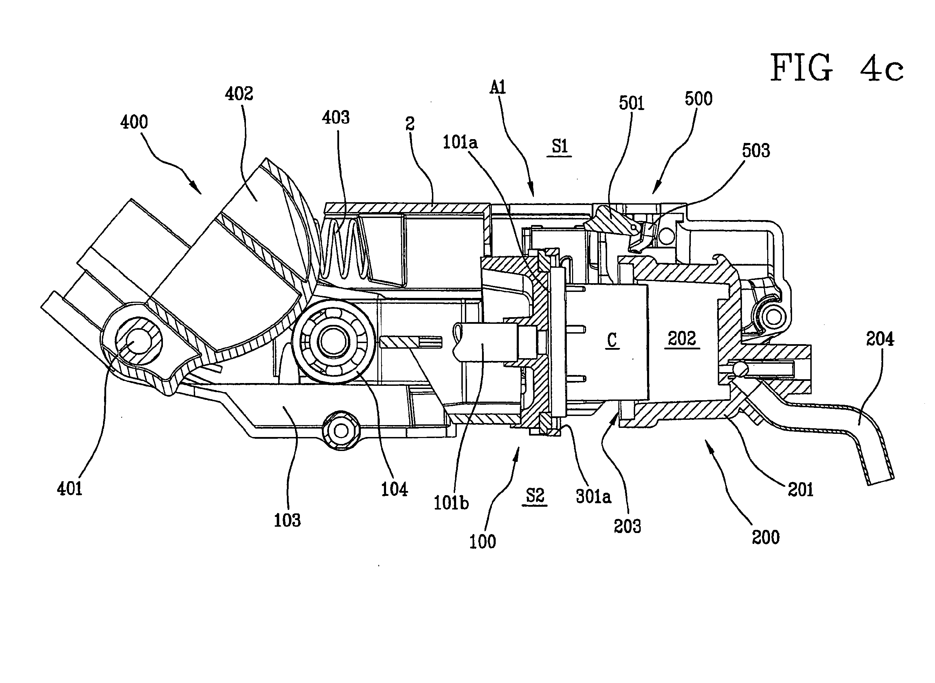

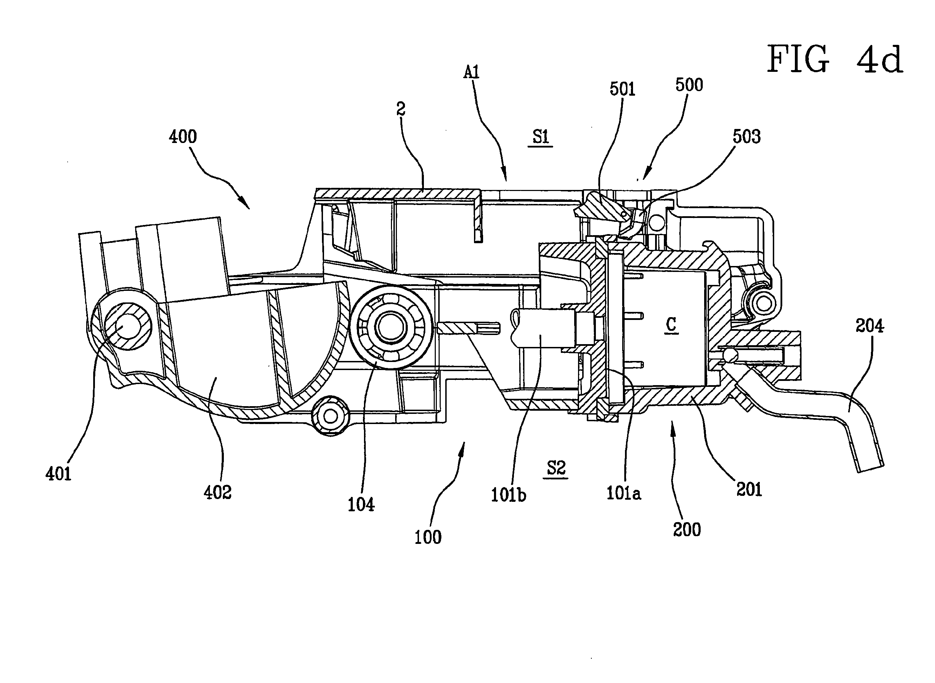

Machine 1 comprises actuating means 400 adapted to cause mutual translation of the water dispensing unit 100 and infusion unit 200 along a mutual-alignment axis, between a mutually-approached condition at which the water dispensing unit 100 is in abutment against the infusion unit 200 (Figs. 4c and 4d) to implement the infusion process, and a mutually-moved apart condition in which replacement of a used capsule "C" with a new capsule "C" is allowed in the infusion unit 200. The actuating means 400 in particular acts on carriage 103 to move the water dispensing unit 100 close to and away from the infusion unit 200. In fact, in accordance with an embodiment shown in the drawings, the water dispensing unit 100 is mounted on a carriage 103 that is shiftable close to and away from the infusion unit 200, preferably along a horizontal direction, while the infusion unit 200 is maintained in a fixed position on the machine 1.

The actuating means 400 can comprise a rotary shaft 401 rotating about a horizontal axis or in any case an axis transverse to a movement direction of the water dispensing unit 100 close to and away from the infusion unit 200. Shaft 401 carries a cam 402 intercepting an abutment 104 consisting of a bearing for example, which is mounted on carriage 103, to cause translation of carriage 103 following angular rotations of shaft 401. The actuating means 400 further comprises a pair of counter-springs 403 acting between the half-casings 2 and carriage 103 to push carriage 103, and therefore the abutment 104, away from the infusion unit 200, so as to generate a reaction contrary to the thrust of cam 402 and keep abutment 104 always in contact with said cam.

The infusion unit 200, located at a position opposite to the water dispensing unit 100 relative to the loading/unloading space "S", comprises a cup-shaped element or cup 201 the shape of which substantially matches that of capsule "C". Preferably cup 201 has a conformation adapted to fully hold said capsule "C".

Cup 201 has a mouth 203 intended for introduction of capsule "C" into a seat 202 formed therein, and facing the water dispensing unit 100 at least during the infusion process.

Advantageously, cup 201 is rotatable about a preferably horizontal tilting axis "B" between an operating position shown in Figs. 4c and 4d, at which it is aligned in parallel with the water dispensing unit 100, its mouth frontally facing the same, and an unloading position shown in Figs. 4a, 4b and 4e at which it is rotated relative to the operating position and its mouth 203 faces downwards.

Said rotation of cup 201 is obtained by a rod 205 having a first end eccentrically connected to cup 201 and the other end adapted to interfere with the movement of carriage 103 away from cup 201.

Preferably cup 201 is maintained to its operating position by a spring not shown. The action of rod 205 overcomes the elastic action of the spring to cause a rotation of cup 201 to its unloading position when carriage 103 and therefore the water dispensing unit 100, move away from cup 201.

Seat 202 defines an infusion chamber in which when the water dispensing unit 100 and cup 201 are in the mutually approached position, the hot water dispensed by diffuser 101 crosses capsule "C" causing infusion of the granulate or powdered product contained in capsule "C". Cup 201 is connected to an outflow pipe 204 through which the drink obtained by infusion is conveyed to a glass or other container.

The loading unit 300 operates close to a loading/unloading space "S" obtained between the water dispensing unit 100 and the infusion unit 200 to load capsule "C" onto the infusion unit. The loading space "S" faces a feeding station "S1" which is disposed on top of the machine 1. The feeding station "S1" is in communication with the loading/unloading space "S" via an upper opening "A1" formed in the half-casings 2, and is adapted to receive the new capsules "C" to be used. The feeding station "S1" can be represented by a manual-insertion point of a capsule "C" or by a true automatic station for supplying capsules "C".

In addition, the loading space "S" faces an unloading station "S2" which is disposed at the bottom of the machine 1. The unloading station "S2" is in communication with the loading/unloading space "S" by a lower opening "A2" formed in the half-casings 2, for receiving the already used capsules "C".

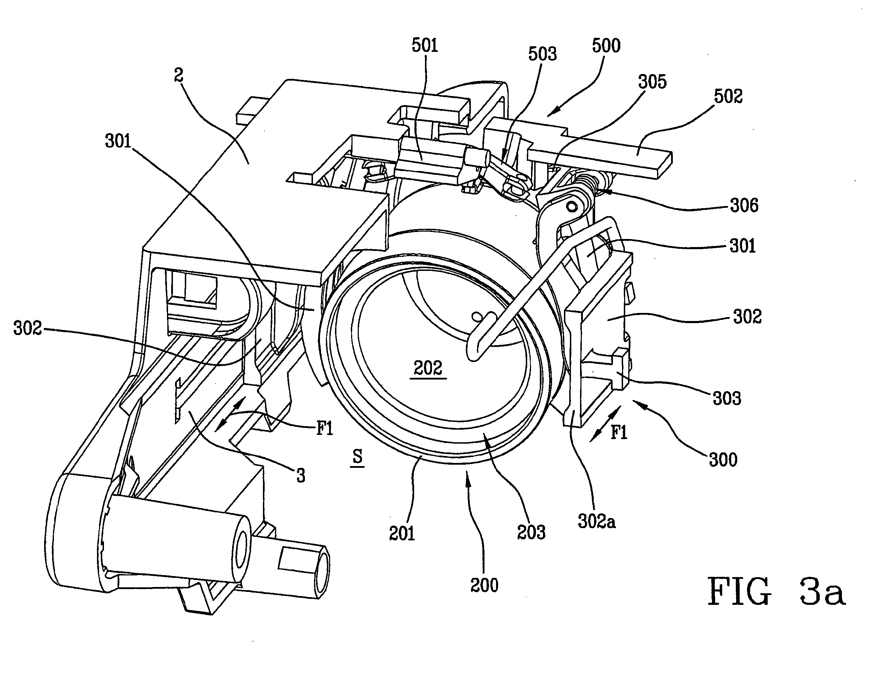

In detail, as shown in Figs. 3a to 3c, the loading unit 300 comprises a pair of preferably curved arms 301 adapted to encompass capsule "C" at least partly and to support it close to the loading/unloading space "S", and a pair of slides 302, slidably mounted on guides 3 formed internally of the half-casings 2 of machine 1. In particular, slides 302 are slidable along a rectilinear direction parallel to an approaching direction between the water dispensing unit 100 and the infusion unit 200 and marked by arrows F1 in Figs. 3a to 3c.

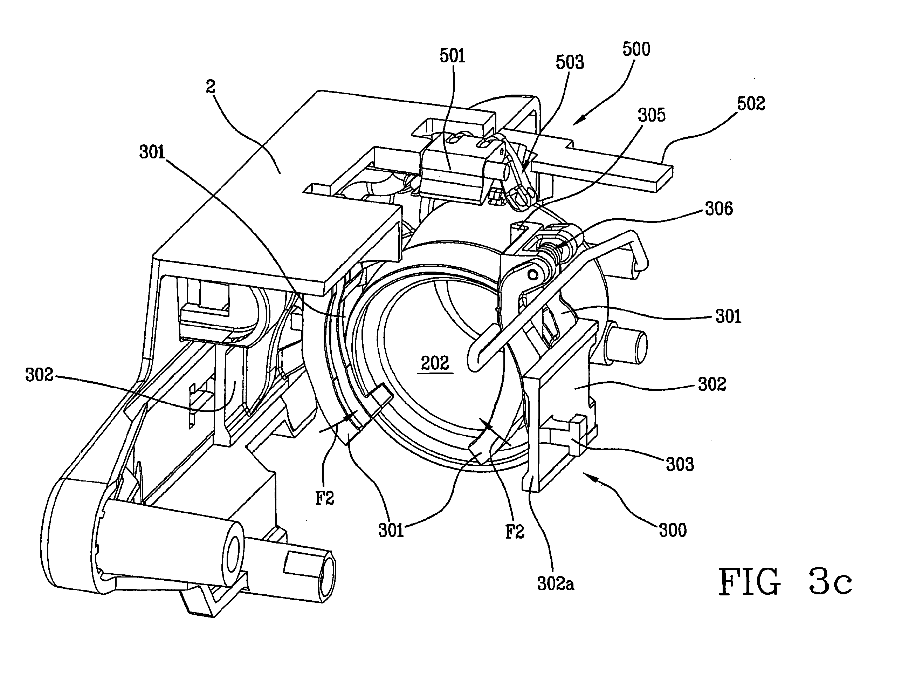

Arms 301 are each hinged on a respective slide 302 so as to rotate relative to the latter between a work position, at which said arms 302 are mutually approached to grasp and steadily hold a capsule "C" and a rest position at which they are disposed mutually wide apart to enable release of capsule "C". The rotation movement of arms 301 to reach the rest position is denoted by arrow "F2" in Fig. 3c. In particular, arms 301 move between said work and rest positions in a plane perpendicular to the approaching and moving apart direction between the water dispensing unit 100 and infusion unit 200. In other words, arms 301 rotate relative to the respective slides 302 along axes substantially parallel to said approaching direction between the water dispensing unit 100 and infusion unit 200. Acting between each arm 301 and the respective slide 302 is a counterspring 306, preferably a torsion spring, tending to keep arm 301 spaced apart from slide 302. In other words, the countersprings 306 normally keep arms 301 in the work position.

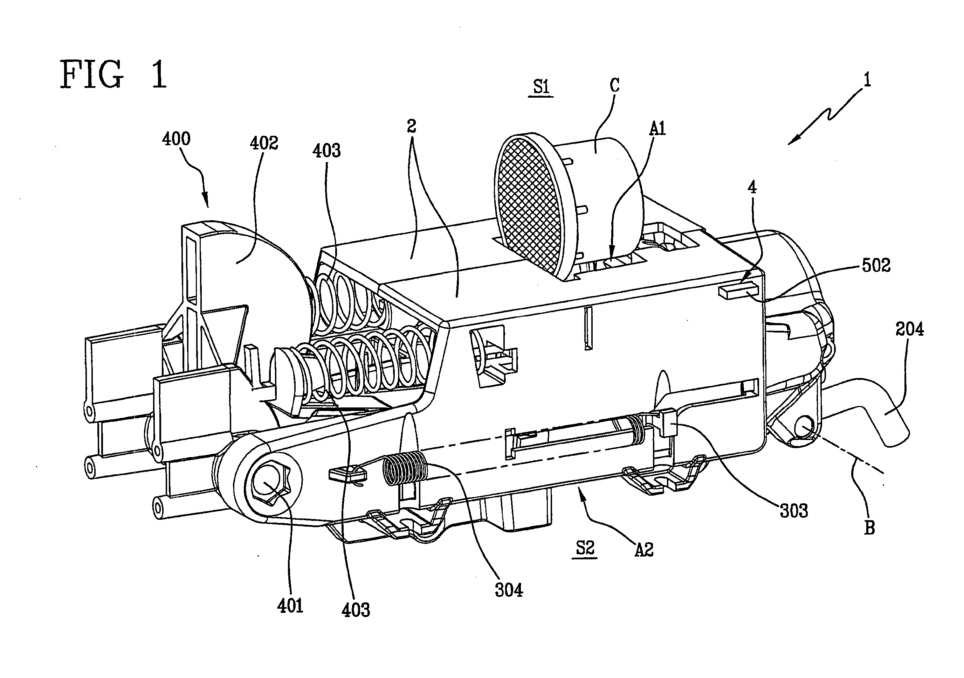

Each slide 302 further has a protrusion 303 in engagement with a respective spring or other suitable return spring member 304, shown in Fig. 1, which acts between slide 302 and a respective half-casing 2 to move slide 302 apart from cup 201 and therefore push slide 302 towards said loading/unloading space "S".

The loading unit 300, i.e. said arms 301 and related slides 302, is slidably movable between a receiving position, at which it is disposed close to the loading/unloading space "S" and preferably under the upper opening "A1" for receiving capsule "C" from the feeding station "S1", and a release position at which it is close to cup 201 to transfer capsule "C" into seat 202. The receiving position is shown in Figs. 3c and 4b. The release position is shown in Figs. 3a and 4a.

Advantageously, each arm 301 has a lead-in portion 301a adapted to come into contact with a front edge of cup 201, and such shaped that when arm 301 approaches cup 201, arms 301 are caused to open wide. Preferably, this lead-in portion 301a is sloping, more preferably chamfered.

Machine 1 further comprises locking means 500 acting between the half-casings 2 and the loading unit 300 to retain the loading unit 300 close to cup 201, and in particular at said release position, overcoming the reaction of the return springs 304.

In this regard, arms 301 each have an engagement portion 305 adapted to be intercepted by the locking means 500 to cause locking of arms 301 when they are close to cup 201.

The locking means 500 comprises a feeler pin consisting of a lever 501 for example, that is pivotally mounted on one or both half-casings 2 and acts at the upper opening "A1" to partly obstruct this opening, so that when a capsule "C" crosses the upper opening "A1", a rotation of lever 501 is induced and the lever is activated.

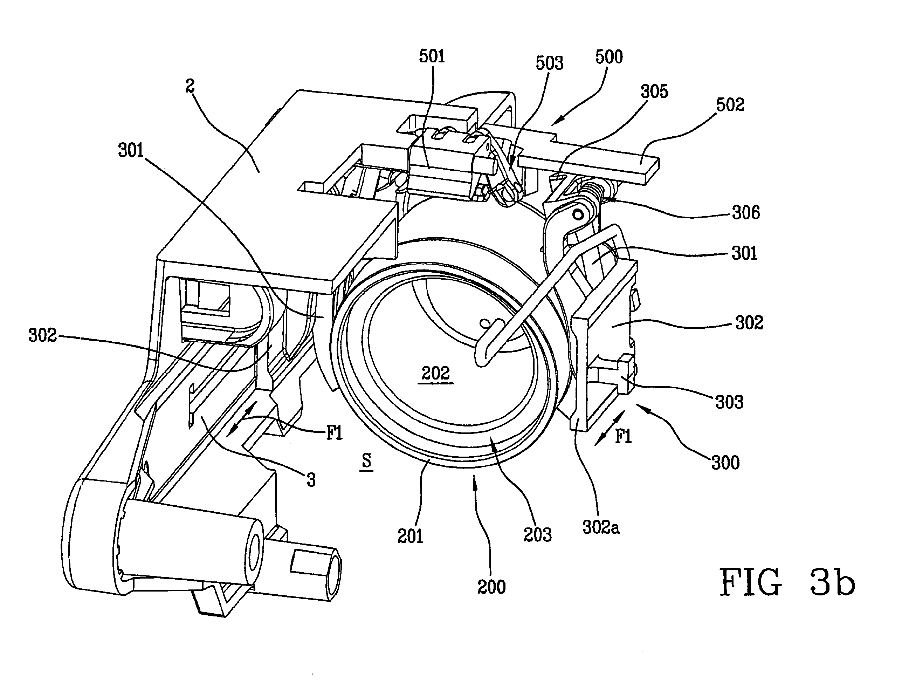

The locking means 500 further comprises at least one catch-coupling member consisting of a slider 502 for example, which is movable between a locked position shown in Fig. 3a, at which it interferes with a translation trajectory of one of said arms 301, and an unlocked position shown in Fig. 3b at which it does not interfere with said arm 301.

In more detail, in the locked position slider 502 intercepts the engagement portion 305 of arm 301 preventing return of arm 301 to the loading/unloading space "S", under the action of the return spring 304. Passage from the locked to the unlocked positions and vice versa is obtained by a translation of slider 502 along a direction transverse to said translation direction of arms 301.

The locking means 500 further comprises an articulated linkage 503, preferably of the type involving ball-and-socket joints, connecting lever 501 to slider 502 to generate a translation of slider 502 following a rotation of lever 501. Slider 502 slides inside a slit 4 formed in a respective half-casing 2 and is adapted to exclusively slide in said direction transverse to the translation direction of arms 301.

Preferably, two opposing sliders 502 are provided, each of them being associated with a respective half-casing 2.

Coupling between the engagement portions 301a of arms 301 and sliders 502 taking place during moving forward of the dispensing unit 100 towards cup 201, is of the catch type, i.e. it is automatically triggered by the advancing movement of arms 301 towards cup 201. On the contrary, for disengagement between said engagement portions 301a of arms 301 and sliders 502 a translation of said sliders is required by effect of the rotation of lever 501.

Operation of machine 1 is the following.

The starting position of an operating cycle is shown in Fig. 4a, in which arms 301 of the loading unit 300 are disposed close to the infusion unit 200 and retained by the locking means 500 in this position, in spite of the fact that the action of the return springs 304 tends to bring arms 301 back to the loading/unloading space "S". This position corresponds to that shown in Fig. 3a.

Starting from this position, a capsule "C" is (manually or automatically) fed to the loading/unloading space "S" through the upper opening "A1". Introduction of capsule "C" into the upper opening "A1" intercepts a portion of lever 501 which is activated and in particular driven in rotation by said capsule "C". Rotation of lever 501 results in a translation of sliders 502 moving close to each other as shown in Fig. 3b. Also visible in Fig. 3b is the downward-rotated position of lever 501, capsule "C" being not shown, for the sake of clarity.

Translation of sliders 502 causes disengagement of same from arms 301 which are therefore allowed to automatically move close to the loading/unloading space "S" under the action of the return springs 304, suddenly reaching the position shown in Figs. 3c and 4b immediately before capsule "C" occupies said loading/unloading space "S". Capsule "C" completes its falling and is inserted between the two arms 301 being steadily retained by arms 301 in the loading/unloading space "S".

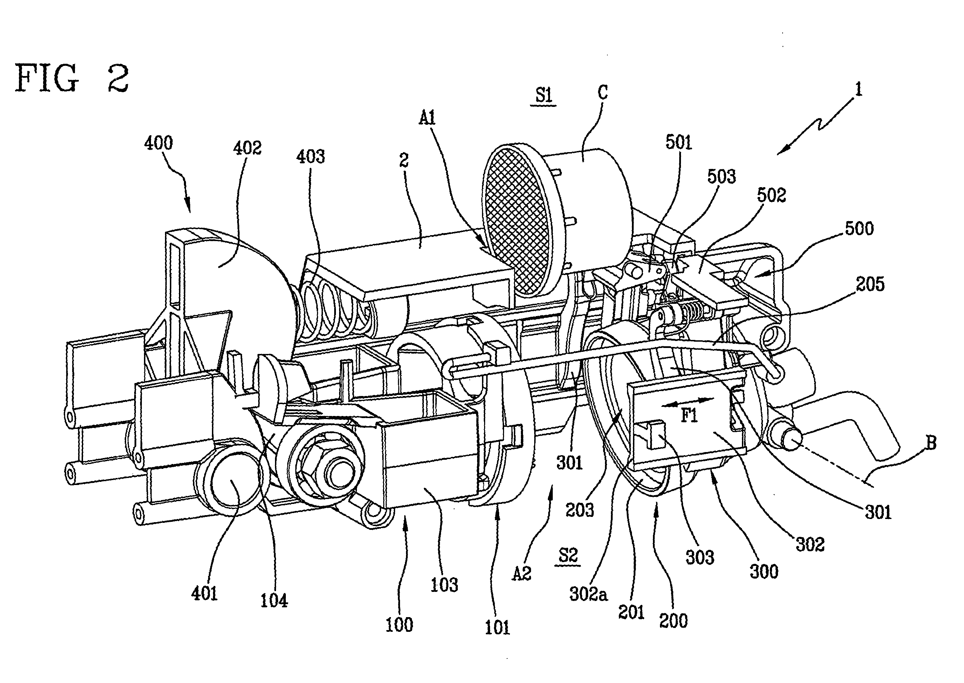

At this point, the actuating cam means 400 is operated, either manually or by a motor, and said means causes the carriage and therefore the dispensing unit 100 to approach cup 201. Advantageously, during moving forward of the dispensing unit 100, carriage 103 intercepts slides 302 at abutment surfaces 302a (Fig. 2) and therefore drags along the loading unit 300 supporting capsule "C", against the action of the return springs 304.

As soon as the lead-in portions 301a of the arms fetch cup 201 and in particular a circular front edge of same, said lead-in portions 301a tend to open wide arms 301 generating a progressive disengagement of arms 301 from capsule "C" (Fig. 4c). A further moving forward of the dispensing unit 100 causes an almost complete insertion of capsule "C" into seat 202 of cup 201, while arms 301 slide on an outer surface of said cup 201 until encompassing it externally (Fig. 4d).

When advancing has been completed, diffuser 101 disposed to a position more forward than the dispensing unit 100, abuts against capsule "C" and the hot-water dispensing process can therefore start giving rise to infusion of the product contained in capsule "C".

Completion of the advancing movement of the dispensing unit 100 further involves catch engagement of the engagement portions 301a of arms 301 with sliders 502.

When infusion has been completed, the dispensing unit 100 moves away from cup 201 reaching its spaced apart position again, under the action of the actuating means 400 and/or the counter-springs 403, and during this moving-apart operation slider 103 drives cup 201 in rotation through a pulling action exerted by rod 205, causing capsule "C" to fall in the unloading station "S2".

The resulting position is shown in Fig. 4e, in which it is possible to see that the loading unit 300 is retained by the locking means 500 and arms 301 encompass cup 201 externally.

From this point, insertion through the upper opening "A1" of a new capsule "C" determines starting of a new cycle.

In accordance with possible alternative embodiments not shown, arms 301 can be such arranged that they move close to the dispensing unit 100 and encompass it, in particular diffuser 101, while the return springs keep a thrust action on arms 201 towards the infusion unit 200. In this circumstance, the locking means 500 acts on arms 301 to keep them to a position at which they encompass the dispensing unit 100.

Preferably, in this possible alternative embodiment carriage 103 supports the infusion unit 200 and the two half-casings 2 which are therefore movable close to and away from the dispensing unit 100 that on the contrary is fixed.

The present invention achieves the intended purposes overcoming the drawbacks complained in the known art.

The machine of the invention allows immediate unloading of the capsule used while an immediate loading of a new capsule is not required, if it is not necessary. Due to the above, the machine is always maintained in optimal running conditions and production of drinks always obtained with fresh capsules is ensured.

In addition, the capsules are inserted into the cup more gently, due to the fact that they are retained in a centred position by the arms supporting the thrust action of the carriage and gently releasing the capsule into the cup without risks of damages to the capsule or jamming of the machine.

## Claims

1. A machine for producing drinks by infusion, comprising:
- a water dispensing unit (100) intended to make the infusion;
- a cup-shaped element or cup (201), adapted to at least partly hold a capsule (C) having a product for infusion inside it and connected to an outflow pipe (204) of a drink obtained from said infusion;
- actuating means (400) for translation of the dispensing unit (100) and the cup (201) relative to each other between a mutually approached condition and a mutually spaced apart condition;
- a loading unit (300) adapted to receive a capsule (C) from a feeding station (S1) and to retain it in a position suitable for insertion of the capsule (C) into the cup (201);
wherein said loading unit (300) comprises at least two arms (301) movable between a work position at which they are disposed close to each other to encompass and support said capsule (C) when the dispensing unit (100) and the cup (201) are in the mutually moved-apart condition and a rest position at which they are mutually moved apart and encompass at least one of said dispensing unit (100) and cup (201) in said mutually approached condition-,
**characterized in that** said loading unit (300) is movable along a rectilinear direction between a receiving position, at which it is disposed close to a loading/unloading space (S) placed between the dispensing unit (100) and the cup (201), and a release position, at which it is close to cup (201) to transfer capsule (C) onto said cup (201), said machine (1) comprising locking means (500) acting on the loading unit (300) to keep it away from said loading/unloading space (S) during mutual translation of the dispensing unit (100) and the cup (201) towards their mutually moved apart condition.

2. A machine as claimed in claim 1, **characterised in that** said locking means (500) comprises a feeler pin (501) that can be activated by said capsule entering the loading/unloading space (S) to enable mutual moving apart between said dispensing unit (100) and said cup (201).

3. A machine as claimed in claim 2, **characterised in that** said feeler pin (501) comprises a lever pivotally mounted on a fixed portion of the machine (1) and drivable in rotation by the entering capsule (C) from the feeding station (S1) towards the loading/unloading space (S).

4. A machine as claimed in one or more of claims 1 to 3, wherein said locking means (500) comprises at least one catch coupling member (502) to be operatively engaged with said loading unit (300) following approaching between the dispensing unit (100) and the cup (201) for retaining the loading unit against the action of spring return members (304).

5. A machine as claimed in claim 4, **characterised in that** said at least one catch coupling member (502) comprises a slider movable between a locked position at which it interferes with at least one of said arms (301) during mutual approaching between the dispensing unit (100) and the cup (201), and an unlocked position at which said slider does not interfere with said arm (301).

6. A machine as claimed in one or more of claims 1 to 5, wherein said locking means (500) further comprises an articulated linkage (503) connecting the feeler pin (501) with said at least one catch coupling member (502).

7. A machine as claimed in claim 1, **characterised in that** said locking means (500) removably retains said loading unit (300) in a position close to the cup (201) when the dispensing unit (100) and the cup (201) are in said mutually moved apart position.

8. A machine as claimed in claim 1, wherein said arms are movable between the mutually approached and mutually moved apart positions in a plane perpendicular to a relative movement axis of said dispensing unit (100) and cup (201).

9. A machine as claimed in claim 1, **characterised in that** said arms (302) have a lead-in portion (301a) suitable for engagement with at least one of said dispensing unit (100) and cup (201) for causing the arms (201) to open wide during movement towards the mutually approached condition of said dispensing unit (100) and cup (201).

10. A machine as claimed in claim 1, **characterised in that** it comprises a pair of slides (302) each of which rotatably supports one of said arms (301), each slide (302) being slidable along a direction parallel to an approaching direction between the dispensing unit (100) and the cup (201).

11. A machine as claimed in claim 10, **characterised in that** said slides (302) are connected to respective return springs (304) suitable to keep the slides (302) in a position moved apart from said cup (201), each slide being operatively pushed close to the cup (201) upon the action of said actuating means (400).

12. A machine as claimed in one or more of the preceding claims, **characterised in that** said cup (201) is rotatable about an axis (B) for taking at least one operating position in which it is able to retain a capsule (C), and an unloading position that is rotated relative to the operating position and in which it is able to release said capsule (C) by gravity.

13. A machine as claimed in claim 12, **characterised in that** rotation of said cup (201) is carried out by the actuating means (400), said operating position of the cup (201) corresponding to said mutually approached condition between the dispensing unit (100) and the cup (201), said unloading position of the cup (201) corresponding to said mutually spaced apart position between the dispensing unit (100) and the cup (201).

14. A machine as claimed in one or more of the preceding claims, **characterised in that** said dispensing unit (100) is mounted on a carriage (103) sliding close to and away from said cup (201) so as to cause movement of the dispensing unit (100) relative to the cup (201), said actuating means (400) comprising cam means acting on said carriage (103) for achieving said mutually approached and mutually spaced apart conditions between the dispensing unit (100) and the cup (201).

## Patentansprüche

1. Maschine zum Herstellen von Getränken durch Aufguss, umfassend:
- eine Wasserabgabeeinheit (100), die zum Bereiten des Aufgusses be-stimmt ist;
- ein tassenförmiges Element oder eine Tasse (201), das bzw. die angepasst ist, eine Kapsel (C) zu halten, die ein Produkt zum Aufguss im Inneren aufweist, und das bzw. die mit einem Auslassrohr (204) für ein Getränk verbunden ist, das durch den Aufguss erhalten wird;
- Betätigungsmittel (400) zur Translation bzw. zum translatorischen Bewegen der Abgabeeinheit (100) und der Tasse (201) relativ zueinander zwischen einen einander angenäherten Zustand und einen voneinander beabstandeten Zustand;
- eine Lade- bzw. Beladeeinheit (300), die angepasst ist, eine Kapsel (C) von einer Zufuhrstation (S1) zu empfangen bzw. aufzunehmen und diese in einer Position zu halten, die zum Einsetzen der Kapsel (C) in die Tasse (201) geeignet ist;
wobei die Beladeeinheit (300) zumindest zwei Arme (301) umfasst, die zwi-schen einer Arbeitsposition, in der sie nahe einander angeordnet sind, um die Kapsel (C) zu umgeben und zu stützen bzw. tragen, wenn die Abgabeeinheit (100) und die Tasse (201) in dem voneinander weg bewegten Zustand sind, und einer Ruheposition beweglich sind, in der sie voneinander weg bewegt sind und zumindest eine der Abgabeeinheit (100) und der Tasse (201) in dem einander angenäherten Zustand umgeben,
**dadurch gekennzeichnet, dass** die Beladeeinheit (300) entlang einer geradli-nigen Richtung zwischen einer Empfangs- bzw. Aufnahmeposition, an der sie sich nahe eines Lade- bzw. Belade-/Entladeraums (S) befindet, der zwischen der Abgabeeinheit (100) und der Tasse (201) platziert ist, und einer Freigabeposition beweglich ist, an der sie nahe an der Tasse (201) ist, um die Kapsel (C) auf die Tasse (201) zu befördern, wobei die Maschine (1) Verriegelungsmittel (500) umfasst, die auf die Beladeeinheit (300) wirken, um sie während der gegenseitigen translatorischen Bewegung der Abgabeeinheit (100) und der Tasse (201) zu ihrem voneinander weg bewegten Zustand von dem Belade-/Entladeraum (S) fern zu halten.

2. Maschine nach Anspruch 1, **dadurch gekennzeichnet, dass** das Verriege-lungsmittel (500) einen Fühler- bzw. Messstift (501) umfasst, der aktiviert werden kann, indem bzw. wenn die Kapsel in den Belade-/Entladeraum (S) eintritt, um ein Voneinanderwegbewegen zwischen der Abgabeeinheit (100) und der Tasse (201) zu ermöglichen.

3. Maschine nach Anspruch 2, **dadurch gekennzeichnet, dass** der Fühlerstift (501) einen Hebel umfasst, der schwenkbar bzw. drehbar an einem fixierten Abschnitt der Maschine (1) montiert ist und durch die eintretende Kapsel (C) von der Zufuhrstation (S1) zu dem Belade-/Entladeraum (S) hin in Drehung bringbar bzw. treibbar ist.

4. Maschine nach einem oder mehreren der Ansprüche 1 bis 3, wobei das Ver-riegelungsmittel (500) zumindest ein Sperren- bzw. Schnapperkopplungsglied (502) umfasst, das wirkungsmäßig mit der Beladeeinheit (300) dem Annähern zwischen der Abgabeeinheit (100) und der Tasse (201) folgend in Eingriff bringbar ist, um die Beladeeinheit gegen die Wirkung von Federrückstellgliedern (304) zurückzuhalten.

5. Maschine nach Anspruch 4, **dadurch gekennzeichnet, dass** das zumindest eine Sperrekopplungsglied (502) einen Schieber umfasst, der zwischen einer verriegelten Position, in der er mit zumindest einem der Arme (301) während des gegenseitigen Annäherns zwischen der Abgabeeinheit (100) und der Tasse (201) zusammentrifft, und einer entriegelten Position beweglich ist, in der der Schieber nicht mit dem Arm (301) zusammentrifft.

6. Maschine nach einem oder mehreren der Ansprüche 1 bis 5, wobei das Ver-riegelungsmittel (500) ferner eine angelenkte Verbindung (503) umfasst, die den Fühlerstift (501) mit dem zumindest einen Sperrekopplungsglied (502) verbindet.

7. Maschine nach Anspruch 1, **dadurch gekennzeichnet, dass** das Verriege-lungsmittel (500) die Beladeeinheit (300) entfernbar in einer Position nahe der Tasse (201) zurückhält, wenn die Abgabeeinheit (100) und die Tasse (201) in der voneinander weg bewegten Position sind.

8. Maschine nach Anspruch 1, wobei die Arme zwischen der einander angenä-herten und der voneinander weg bewegten Position in einer Ebene senkrecht zu einer Achse relativer Bewegung der Abgabeeinheit (100) und der Tasse (201) beweglich sind.

9. Maschine nach Anspruch 1, **dadurch gekennzeichnet, dass** die Arme (302) einen Einführungsabschnitt (301a) aufweisen, der zum Eingriff mit zumindest einem der Abgabeeinheit (100) und der Tasse (201) geeignet ist, um zu bewirken, dass sich die Arme (201) während der Bewegung in den einander angenäherten Zustand der Abgabeeinheit (100) und der Tasse (201) weit öffnen.

10. Maschine nach Anspruch 1, **dadurch gekennzeichnet, dass** sie ein Paar Schieber (302) umfasst, die jeweils einen der Arme (301) drehbar stützen bzw. tragen, wobei jeder Schieber (302) entlang einer Richtung parallel zu einer Annäherungsrichtung zwischen der Abgabeeinheit (100) und der Tasse (201) verschiebbar ist.

11. Maschine nach Anspruch 10, **dadurch gekennzeichnet, dass** die Schieber (302) mit jeweiligen Rückstellfedern (304) verbunden sind, die geeignet sind, die Schieber (302) in einer von der Tasse (201) wegbewegten Position zu halten, wobei jeder Schieber auf Wirken des Betätigungsmittels (400) hin wir-kungsmäßig nahe an die Tasse (201) gedrückt wird.

12. Maschine nach einem oder mehreren der vorhergehenden Ansprüche, da-durch gekennzeichnet, dass die Tasse (201) um eine Achse (B) drehbar ist, um zumindest eine Betriebsposition, in der sie in der Lage ist, eine Kapsel (C) zu halten, und eine Entladeposition einzunehmen, die relativ zu der Betriebs-position gedreht ist und in der sie in der Lage ist, die Kapsel (C) durch Schwerkraft freizugeben.

13. Maschine nach Anspruch 12, **dadurch gekennzeichnet, dass** die Drehung der Tasse (201) durch das Betätigungsmittel (400) ausgeführt wird, wobei die Betriebsposition der Tasse (201) dem einander angenäherten Zustand zwischen der Abgabeeinheit (100) und der Tasse (201) entspricht, wobei die Entladeposition der Tasse (201) der voneinander beabstandeten Position zwischen der Abgabeeinheit (100) und der Tasse (201) entspricht.

14. Maschine nach einem oder mehreren der vorhergehenden Ansprüche, **da-durch gekennzeichnet, dass** die Abgabeeinheit (100) an einem Schlitten bzw. Wagen (103) montiert ist, der nahe zu und weg von der Tasse (201) gleitet, um eine Bewegung der Abgabeeinheit (100) relativ zu der Tasse (201) zu bewirken, wobei das Betätigungsmittel (400) Nockenmittel umfasst, die auf den Wagen (103) wirken, um den einander angenäherten und den voneinander beabstandeten Zustand zwischen der Abgabeeinheit (100) und der Tasse (201) zu aktivieren.

## Revendications

1. Machine destinée à produire des boissons par infusion, comprenant :
- une unité de distribution d'eau (100) prévue pour faire l'infusion ;
- un élément en forme de coupelle ou une coupelle (201), adapté pour tenir au moins en partie une capsule (C) qui présente à l'intérieur un produit destiné à une infusion et qui est relié à un conduit de sortie (204) d'une boisson obtenue à partir de ladite infusion;
- des moyens d'actionnement (400) destinés à exécuter une trans-lation de l'unité de distribution (100) et de la coupelle (201) l'une par rapport à l'autre entre une condition d'approche mutuelle et une condition d'éloignement mutuel;
- une unité de chargement (300) adaptée pour recevoir une capsule (C) en provenance d'un poste d'alimentation (S1) et pour la maintenir en une position appropriée à une insertion de la capsule (C) dans la coupelle (201); dans laquelle ladite unité de chargement (300) comprend au moins deux bras (301) mobiles entre une position de travail où ils sont dispo-sés à proximité l'un de l'autre de manière à entourer et à supporter ladite capsule (C) lorsque l'unité de distribution (100) et la coupelle (201) se trouvent dans la condition éloignée mutuelle et dans une position de repos où ils sont mutuellement éloignés et entourent l'une au moins de ladite unité de distribution (100) et de la coupelle (201) dans ladite condition d'approche mutuelle;
**caractérisée en ce que** ladite unité de chargement (300) est mobile le long d'une direction rectiligne entre une position de réception, où elle se situe à proximité d'un espace de chargement / de déchargement (S) situé entre l'unité de distribution (100) et la coupelle (201), et une position de libération, où elle se situe à proximité de la coupelle (201) de façon à transférer la capsule (C) sur ladite coupelle (201), ladite machine (1) comprenant des moyens de verrouillage (500) qui agissent sur l'unité de chargement (300) de manière à la maintenir éloignée dudit espace de chargement / de déchargement (S) au cours de la translation mutuelle de l'unité de distribution (100) et de la coupelle (201) vers leur condition éloignée mutuelle.

2. Machine selon la revendication 1, **caractérisée en ce que** lesdits moyens de verrouillage (500) comprennent une broche de palpeur (501) qui peut être activée par l'entrée de ladite capsule dans l'espace de chargement/de déchargement (S) de façon à permettre un éloigne-ment mutuel entre ladite unité de distribution (100) et ladite coupelle (201).

3. Machine selon la revendication 2, **caractérisée en ce que** ladite broche de palpeur (501) comprend un levier monté à pivotement sur une partie fixe de la machine (1) et qui peut être entraîné en rotation par l'entrée de la capsule (C) en provenance du poste d'alimentation (S1) vers l'espace de chargement/de déchargement (S).

4. Machine selon l'une quelconque des revendications 1 à 3, dans laquelle lesdits moyens de verrouillage (500) comprennent au moins un élément d'accouplement par encliquetage (502) destiné à être mis en prise de manière opérationnelle avec ladite unité de chargement (300) après une approche de l'unité de distribution (100) et de la coupelle (201) de façon à retenir l'unité de chargement contre l'action d'éléments de rappel par ressort (304).

5. Machine selon la revendication 4, **caractérisée en ce que** ledit au moins un élément d'accouplement par encliquetage (502) comprend un coulisseau mobile entre une position verrouillée où il interfère avec au moins l'un desdits bras (301) au cours d'une approche mutuelle entre l'unité de distribution (100) et la coupelle (201), et une position déverrouillée où ledit coulisseau n'interfère pas avec ledit bras (301).

6. Machine selon l'une quelconque des revendications 1 à 5, dans laquelle lesdits moyens de verrouillage (500) comprennent en outre une tringlerie articulée (503) qui relie la broche de palpeur (501) et ledit au moins un élément d'accouplement par encliquetage (502).

7. Machine selon la revendication 1, **caractérisée en ce que** lesdits moyens de verrouillage (500) retiennent de manière amovible ladite unité de chargement (300) dans une position proche de la coupelle (201) lorsque l'unité de distribution (100) et la coupelle (201) se trouvent dans ladite position éloignée mutuelle.

8. Machine selon la revendication 1, dans laquelle lesdits bras sont mobiles entre les positions d'approche mutuelle et d'éloignement mutuel dans un plan perpendiculaire à un axe de déplacement relatif de ladite unité de distribution (100) et de la coupelle (201).

9. Machine selon la revendication 1, **caractérisée en ce que** lesdits bras (302) présentent une partie entrée (301a) appropriée à une mise en prise avec au moins l'une de ladite unité de distribution (100) et de la coupelle (201) de façon à provoquer une ouverture large des bras (201) au cours d'un déplacement vers la condition d'approche mutuelle de ladite unité de distribution (100) et de la coupelle (201).

10. Machine selon la revendication 1, **caractérisée en ce qu'**elle comprend une paire de coulisses (302), chacune d'elles supportant à rotation l'un desdits bras (301), chaque coulisse (302) pouvant coulis-ser le long d'une direction parallèle à une direction d'approche entre l'unité de distribution (100) et la coupelle (201).

11. Machine selon la revendication 10, **caractérisée en ce que** lesdites coulisses (302) sont reliées à des ressorts de rappel respectifs (304) appropriés pour maintenir les coulisses (302) dans une position éloi-gnée de ladite coupelle (201), chaque coulisse étant poussée de manière opérationnelle à proximité de la coupelle (201) lorsque lesdits moyens d'actionnement (400) sont actionnés.

12. Machine selon l'une quelconque des revendications précédentes, **caractérisée en ce que** ladite coupelle (201) peut tourner autour d'un axe (B) de façon à prendre au moins une position opérationnelle où elle peut retenir une capsule (C), et une position de déchargement qui est tournée par rapport à la position opérationnelle et où elle peut libérer ladite capsule (C) en raison de la pesanteur.

13. Machine selon la revendication 12, **caractérisée en ce que** la rotation de ladite coupelle (201) est exécutée par les moyens d'action-nement (400), ladite position opérationnelle de la coupelle (201) correspondant à ladite condition d'approche mutuelle entre l'unité de distribution (100) et la coupelle (201), ladite position de déchargement de la coupelle (201) correspondant à ladite position éloignée mutuelle entre l'unité de distribution (100) et la coupelle (201).

14. Machine selon l'une quelconque des revendications précédentes, **caractérisée en ce que** ladite unité de distribution (100) est montée sur un chariot (103) qui coulisse à proximité de ladite coupelle (201) en allant et en s'éloignant de celle-ci, de façon à provoquer un déplace-ment de l'unité de distribution (100) par rapport à la coupelle (201), lesdits moyens d'actionnement (400) comprenant des moyens de came qui agissent sur ledit chariot (103) de manière à obtenir lesdites conditions d'approche mutuelle et d'éloignement mutuel entre l'unité de distribution (100) et la coupelle (201).
